# EUROPÄISCHE PATENTSCHRIFT

(11) **EP 3 511 950 B1**
(45) Veröffentlichungstag und Bekanntmachung des Hinweises auf die Patenterteilung: **26.02.2025**
(21) Anmeldenummer: 18151891.1
(22) Anmeldetag: 16.01.2018
(51) Int. Cl.: H01B 3/30, H01B 17/64, H01B 7/02

(54) **LACKDRAHT**
ENAMELLED WIRE
FIL ÉMAILLÉ

(43) Veröffentlichungstag der Anmeldung: 17.07.2019
(73) Patentinhaber: Schwering & Hasse Elektrodraht GmbH, 32676 Lügde (DE)
(72) Erfinder: REICHER, Johann, 31848 Bad Münder (DE); HAASE, Roxana, 31812 Bad Pyrmont (DE)
(74) Vertreter: Andrejewski - Honke Patent- und Rechtsanwälte Partnerschaft mbB

(56) Entgegenhaltungen:
- EP-B1- 2 923 362
- WO-A1-2013/054738
- WO-A1-99/08288
- US-A- 4 537 804
- US-A- 6 087 592

## Beschreibung

Die Erfindung betrifft einen Lackdraht mit einem Leiterkern, wobei die Oberfläche des Leiterkerns vollständig bzw. im Wesentlichen vollständig mit einem Elektroisolierlack beschichtet ist.

Lackdrähte der vorstehend genannten Art sind aus der Praxis und aus dem Stand der Technik in unterschiedlichen Ausführungsformen prinzipiell bekannt. Es wird auf US 6,087,592 A, US 4,537,804 A, WO 99/08288 A1, WO 2013/054738 A1 und EP 2 923 362 B1 verwiesen. Derartige Lackdrähte werden in elektrischen Maschinen bzw. Bauteilen wie Spulen, Rotoren und dergleichen verwendet. Zur Herstellung solcher Maschinen bzw. Bauteile wird der Lackdraht üblicherweise aufgewickelt und eine Vielzahl von Wicklungen des Lackdrahts wird beispielsweise in einer Nut angeordnet. Bei diesem Wicklungsvorgang ist es erstrebenswert, eine hohe Packungsdichte des Lackdrahtes zu erreichen, da der Wirkungsgrad der Maschinen bzw. Bauteile von der Ausnutzung der zur Verfügung stehenden Nutfläche bzw. Nutquerschnittsfläche abhängt. Diese Ausnutzung der zur Verfügung stehenden Nutfläche kann durch den Nutfüllfaktor beschrieben werden, der das Verhältnis der effektiven Querschnittsfläche des Leiterkerns zur maximalen Querschnittsfläche der Nut angibt. Neben dem Bestreben einen möglichst hohen Wirkungsgrad zu erreichen, ist eine hohe Packungsdichte bzw. eine optimale Ausnutzung der zur Verfügung stehenden Nutfläche auch hinsichtlich der Größe der Maschinen bzw. Bauteile vorteilhaft, da eine hohe Packungsdichte bzw. eine hohe Ausnutzung der Nutfläche eine kompaktere Bauweise ermöglicht.

Bei den aus der Praxis bekannten Lackdrähten hat sich gezeigt, dass die zur Verfügung stehenden Nutflächen oftmals nicht in zufriedenstellender Art und Weise ausgenutzt werden können und in der Folge niedrige Nutfüllfaktoren und somit geringe Wirkungsgrade erreicht werden. Bei den bekannten Lackdrähten muss die auf dem Leiterkern aufgebrachte Isolationsschicht eine bestimmte Mindestdicke aufweisen, um die an den Lackdraht gestellten Anforderungen hinsichtlich der elektrischen Eigenschaften, wie beispielsweise der Durchschlagfestigkeit, zu erfüllen. Gleichzeitig begrenzt diese Mindestschichtdicke den maximal zu erreichenden Nutfüllfaktor. Um die erforderlichen elektrischen Eigenschaften zu gewährleisten, muss die Drahtisolation mithin eine gewisse Dicke aufweisen und gleichzeitig nimmt der Nutfüllfaktor und damit verbunden auch der Wirkungsgrad des Bauteils bzw. der Maschine mit zunehmender Isolationsschichtdicke ab.

Demgegenüber liegt der Erfindung das technische Problem zugrunde, einen Lackdraht der eingangs genannten Art anzugeben, der sich durch eine im Vergleich zu den aus der Praxis bekannten Lackdrähten vorteilhaft dünne Isolationsschicht auszeichnet, mit dem die bisher bekannten Nutfüllfaktoren verbessert werden können und der dennoch allen Anforderungen hinsichtlich der elektrischen Eigenschaften genügt. Der Erfindung liegt also gleichsam das technische Problem zugrunde, einen Lackdraht anzugeben, der einen optimalen Kompromiss zwischen einer dünnen Schichtdicke des Elektroisolierlackes und dennoch zufriedenstellenden, die Anforderungen erfüllenden, elektrischen Eigenschaften ermöglicht, mit dem die beim Wicklungsvorgang zur Verfügung stehende Nutfläche optimal ausgenutzt werden kann.

Zur Lösung des technischen Problems lehrt die Erfindung einen Lackdraht, mit einem Leiterkern, wobei die Oberfläche des Leiterkerns vollständig bzw. im Wesentlichen vollständig mit einem Elektroisolierlack beschichtet ist, wobei der Elektroisolierlack auf Basis zumindest eines Lackpolymers ausgebildet ist, wobei der Elektroisolierlack eine Mehrzahl von Funktionsschichten aufweist, wobei als Funktionsschicht(en)
- zumindest eine Leitfunktionsschicht mit zumindest einem leitfähigen Zusatzstoff vorgesehen ist
- und zumindest eine Isolierfunktionsschicht mit zumindest einem isolierenden Füllstoff vorgesehen ist
- und zumindest eine Neutralfunktionsschicht vorgesehen ist, die frei von leitfähigen Zusatzstoffen und frei von isolierenden Füllstoffen ist und die aus dem zumindest einen Lackpolymer bzw. im Wesentlichen aus dem zumindest einen Lackpolymer besteht,
wobei unmittelbar auf dem Leiterkern eine Neutralfunktionsschicht als Basisschicht aufgebracht ist, wobei auf dieser Basisschicht zumindest eine Leitfunktionsschicht und zumindest eine Isolierfunktionsschicht aufgebracht ist und wobei das Verhältnis des Durchmessers des Leiterkerns zur Gesamtschichtdicke des Elektroisolierlacks größer oder gleich drei ist.

Es hat sich bewährt, dass der Leiterkern aus Kupfer oder Aluminium bzw. im Wesentlichen aus Kupfer oder Aluminium besteht. Grundsätzlich sind aber auch andere elektrisch leitende Stoffe, vorzugsweise Metalle, mögliche Materialien für den Leiterkern des Lackdrahtes. Empfohlenermaßen ist der Leiterkern ein Runddraht und weist somit eine runde Querschnittsfläche auf. Gemäß einer alternativen Ausführungsvariante handelt es sich bei dem Leiterkern um einen Flachdraht mit ovaler Querschnittsfläche oder um einen Rechteckdraht mit rechteckiger Querschnittsfläche. Grundsätzlich liegen auch andere Formen der Querschnittsfläche des Leiterkerns im Rahmen der Erfindung.

Leitfähigkeit meint im Rahmen der Erfindung insbesondere elektrische Leitfähigkeit. Leitfähiger Zusatzstoff meint in diesem Zusammenhang also insbesondere einen elektrisch leitfähigen bzw. leitenden Zusatzstoff, während isolierender Füllstoff im Rahmen der Erfindung einen nicht bzw. im Wesentlichen nicht elektrisch leitfähigen bzw. leitenden Füllstoff meint.

Vorzugsweise weist die zumindest eine Leitfunktionsschicht zumindest das Lackpolymer und zumindest einen leitfähigen Zusatzstoff auf und besonders bevorzugt bildet das zumindest eine Lackpolymer dabei eine Matrix in der der zumindest eine leitfähige Zusatzstoff angeordnet ist. Es liegt im Rahmen der Erfindung, dass die zumindest eine Isolierfunktionsschicht zumindest das Lackpolymer und zumindest einen isolierenden Füllstoff aufweist und besonders bevorzugt bildet das zumindest eine Lackpolymer eine Matrix, in der der zumindest eine isolierende Füllstoff angeordnet ist.

Erfindungsgemäß weist der Elektroisolierlack zumindest eine Leitfunktionsschicht und zumindest eine Isolierfunktionsschicht auf. Bei dieser Ausführungsform sind vorzugsweise der zumindest eine leitfähige Zusatzstoff und der zumindest eine isolierende Füllstoff jeweils in separaten Funktionsschichten des Elektroisolierlackes angeordnet, nämlich in der zumindest einen Leitfunktionsschicht einerseits und in der zumindest einen Isolierfunktionsschicht andererseits.

Gemäß sehr empfohlener Ausführungsform der Erfindung weist der Elektroisolierlack zumindest zwei Leitfunktionsschichten und/oder zumindest zwei Isolierfunktionsschichten auf. Zweckmäßigerweise sind die Funktionsschichten dann in alternierender Schichtenfolge angeordnet, beispielsweise in der Reihenfolge "Leitfunktionsschicht - Isolierfunktionsschicht - Leitfunktionsschicht - Isolierfunktionsschicht". Besonders bevorzugt sind die in alternierender Schichtenfolge angeordneten Leit- bzw. Isolierfunktionsschichten unmittelbar auf der Basisschicht angeordnet bzw. aufgebracht. Es liegt fernerhin im Rahmen der Erfindung, dass zumindest zwei Leitfunktionsschichten und/oder zumindest zwei Isolierfunktionsschichten vorgesehen sind und dass außerdem zusätzlich zu der erfindungsgemäßen Basisschicht zumindest eine weitere Neutralfunktionsschicht vorgesehen ist, wobei die Funktionsschichten empfohlenermaßen in alternierender Schichtenfolge angeordnet sind.

Eine bevorzugte Ausgestaltung der Erfindung ist dadurch gekennzeichnet, dass eine Abschlussschicht des Elektroisolierlackes vorgesehen ist, wobei die Abschlussschicht vorzugsweise die äußere Schicht des Elektroisolierlackes ist, die den größten Abstand der Elektroisolierlackschichten vom Leiterkern aufweist. Zweckmäßigerweise ist die Abschlussschicht eine Isolierfunktionsschicht oder eine Neutralfunktionsschicht. Gemäß besonders empfohlener Ausführungsform ist die Abschlussschicht eine Neutralfunktionsschicht. Es liegt weiterhin im Rahmen der Erfindung, dass auf dem Elektroisolierlack bzw. auf der Abschlussschicht zumindest eine Außenschicht, vorzugsweise eine von dem Elektroisolierlack verschiedene Außenschicht angeordnet ist, wobei die Außenschicht besonders bevorzugt eine Gleitschicht ist, deren Reibungskoeffizient vorzugsweise kleiner ist, als der Reibungskoeffizient des Elektroisolierlacks bzw. der Abschlussschicht des Elektroisolierlacks.

Empfohlenermaßen weist der Elektroisolierlack zumindest drei, bevorzugt zumindest vier Funktionsschichten auf. Es empfiehlt sich, dass der Elektroisolierlack zumindest fünf, vorzugsweise zumindest sechs Funktionsschichten aufweist. Nach einer bewährten Ausführungsform der Erfindung weist der Elektroisolierlack maximal 40, bevorzugt maximal 35, besonders bevorzugt maximal 30 Funktionsschichten auf.

Eine Ausführungsvariante, der im Rahmen der Erfindung ganz besondere Bedeutung zukommt, ist dadurch gekennzeichnet, dass die Schichtdicke einer Funktionsschicht zwischen 0,5 µm und 15 µm, bevorzugt zwischen 1 µm und 10 µm, besonders bevorzugt zwischen 2 µm und 5 µm beträgt. Schichtdicke bzw. Dicke der Schicht meint im Rahmen der Erfindung insbesondere die Ausdehnung der Schicht quer zur Längsrichtung des Lackdrahtes. Es liegt im Rahmen der Erfindung, dass die einzelnen Funktionsschichten die gleiche Schichtdicke bzw. im Wesentlichen die gleiche Schichtdicke besitzen. Grundsätzlich können die einzelnen Funktionsschichten aber auch voneinander verschiedene Schichtdicken aufweisen.

Nach einer bevorzugten Ausführungsvariante ist die Basisschicht als Schichtaggregat aus zumindest zwei Neutralfunktionsschichten ausgebildet. Vorzugsweise besteht das Schichtaggregat lediglich aus Neutralfunktionsschichten ohne Zwischenschaltung anderer Funktionsschichten und das Schichtaggregat bzw. die Basisschicht ist unmittelbar auf dem Leiterkern aufgebracht.

Eine ganz besonders bevorzugte Ausführungsform der Erfindung ist dadurch gekennzeichnet, dass die Gesamtschichtdicke (d_{E}) des Elektroisolierlacks zwischen 2 µm und 200 µm, bevorzugt zwischen 3 µm und 150 µm, besonders bevorzugt zwischen 3,5 µm und 120 µm beträgt. Es empfiehlt sich, dass der Leiterkern einen Durchmesser (d_{K}) zwischen 0,03 mm und 7 mm, bevorzugt zwischen 0,05 mm und 5 mm aufweist. Durchmesser (d_{K}) des Leiterkerns meint in diesem Zusammenhang den größten Durchmesser der Querschnittsfläche des Leiterkerns, quer zur Längsrichtung des Lackdrahtes.

Erfindungsgemäß ist das Verhältnis des Durchmessers (d_{K}) des Leiterkerns zur Gesamtschichtdicke (d_{E}) des Elektroisolierlacks größer oder gleich drei. Zweckmäßigerweise ist das Verhältnis des Durchmessers des Leiterkerns zur Gesamtschichtdicke des Elektroisolierlacks größer oder gleich vier, bevorzugt größer oder gleich fünf, besonders bevorzugt größer oder gleich zehn. Gemäß einer Ausführungsform ist das Verhältnis des Durchmessers des Leiterkerns zur Gesamtschichtdicke des Elektroisolierlacks größer oder gleich 20, bevorzugt größer oder gleich 30, beispielsweise 40. Es empfiehlt sich, dass das Verhältnis des Durchmessers des Leiterkerns zur Gesamtschichtdicke des Elektroisolierlacks zumindest 3, vorzugsweise zumindest 5 und besonders bevorzugt zumindest 10 beträgt, wenn der Durchmesser des Leiterkerns zwischen 0,05 mm und 1 mm beträgt. Es liegt im Rahmen der Erfindung, dass das Verhältnis des Durchmessers des Leiterkerns zur Gesamtschichtdicke des Elektroisolierlackes zumindest 10, vorzugsweise zumindest 20, besonders bevorzugt zumindest 30 beträgt, wenn der Leiterkern einen Durchmesser von bevorzugt mehr als 1 mm besitzt.

Eine Ausführungsform, der im Rahmen der Erfindung ganz besondere Bedeutung zukommt, ist dadurch gekennzeichnet, dass der leitfähige Zusatzstoff aus der Gruppe: "Anorganisches Halbleitermaterial, organisches Halbleitermaterial, leitfähiges Kohlenstoffmaterial" ausgewählt ist. Halbleitermaterial meint in diesem Zusammenhang insbesondere ein Material, das hinsichtlich seiner elektrischen Leitfähigkeit (σ) zwischen der von elektrischen Leitern und der von Nichtleitern liegt.

Zweckmäßigerweise ist der leitfähige Zusatzstoff ein keramisches Halbleitermaterial, das vorzugsweise aus der Gruppe: "Carbide, Silizide, Nitride, Oxide, Titanate" ausgewählt ist. Bevorzugt ist der leitfähige Zusatzstoff ein Carbid oder Nitrid. Dieser Ausführungsform liegt die Erkenntnis zugrunde, dass mit Carbiden oder Nitriden als leitfähigen Zusatzstoffen besonders vorteilhafte Eigenschaften des Lackdrahtes erzielt werden können und insbesondere eine geringe Isolationsschichtdicke bei gleichzeitig überraschend hoher Durchschlagfestigkeit erzielt werden kann. Es hat sich in diesem Zusammenhang bewährt, dass der leitfähige Zusatzstoff ein Siliziumcarbid oder Übergangsmetallnitrid, bevorzugt ein frühes Übergangsmetallnitrid ist. Frühes Übergangsmetallnitrid meint in diesem Zusammenhang ein Übergangsmetallnitrid mit einem Gruppe-3-, Gruppe-4-, Gruppe-5-, oder Gruppe-6-Übergangsmetall, also einem Übergangsmetall aus der Scandium-, der Titan-, der Vanadium-, oder der Chrom-Gruppe. Ganz besonders bevorzugt ist der leitfähige Zusatzstoff aus der Gruppe: "Titannitride, Zirconiumnitride, Hafniumnitride, Vanadiumnitride, Niobnitride, Tantalnitride, Chromnitride, Molybdännitride, Wolframnitride" ausgewählt.

Es liegt fernerhin im Rahmen der Erfindung, dass der leitfähige Zusatzstoff aus der Gruppe: "Ruße, Kohlenstoffnanoröhren, Fullerene, Graphen, Graphit, Glaskohlenstoffe" ausgewählt ist.

Nach besonders empfohlener Ausführungsform der Erfindung ist der leitfähige Zusatzstoff ein II-VI-Halbleiter, bevorzugt ein Zinksulfid oder Zinkoxid. II-VI-Halbleiter meint in diesem Zusammenhang einen Verbindungshalbleiter, der aus zumindest einem Element der zweiten Hauptgruppe (Erdalkalimetalle) und/oder zumindest einem Gruppe-12-Element und zumindest einem Element der sechsten Hauptgruppe (Chalkogene) besteht.

Es liegt im Rahmen der Erfindung, dass der Elektroisolierlack eine Mehrzahl verschiedener leitfähiger Zusatzstoffe, beispielsweise zumindest zwei leitfähige Zusatzstoffe, enthält. Bei einer derartigen Ausführungsform können die zumindest zwei voneinander verschiedenen leitfähigen Zusatzstoffe jeweils in unterschiedlichen Leitfunktionsschichten und/oder in denselben den Leitfunktionsschichten angeordnet sein.

Eine sehr bewährte Ausführungsform der Erfindung ist dadurch gekennzeichnet, dass der isolierende Füllstoff ein anorganischer Stoff ist. Es empfiehlt sich, dass der isolierende Füllstoff aus der Gruppe: "Glimmer, Kaolin, Korund, Edelkorund, Silikate, Aluminiumoxide, Sulfate, Siliziumdioxide, Titandioxide" ausgewählt ist.

Nach einer bevorzugten Ausführungsvariante ist der isolierende Füllstoff ein oberflächenmodifiziertes Silikat. Empfohlenermaßen ist der isolierende Füllstoff ein silanisiertes Silikat, besonders bevorzugt ein mit zumindest einer Komponente aus der Gruppe: "Aminosilan, Epoxysilan, Methacrylsilan, Trimethylsilan, Methylsilan, Vinylsilan" modifiziertes Silikat.

Es liegt weiterhin im Rahmen der Erfindung, dass der Elektroisolierlack eine Mehrzahl verschiedener isolierender Füllstoffe, beispielsweise zumindest zwei verschiedene isolierende Füllstoffe, aufweist. Im Rahmen einer derartigen Ausführungsform können die zumindest zwei voneinander unterschiedlichen isolierenden Füllstoffe jeweils in unterschiedlichen Isolierfunktionsschichten und/oder in denselben Isolierfunktionsschichten angeordnet sein.

Gemäß besonders bevorzugter Ausführungsform der Erfindung weisen die Partikel des leitfähigen Zusatzstoffes und/oder des isolierenden Füllstoffes eine Partikelgröße im Bereich von 0,05 bis 50 µm, vorzugsweise im Bereich von 0,05 bis 20 µm, bevorzugt im Bereich von 0,1 bis 10 µm und besonders bevorzugt im Bereich von 0,1 bis 5 µm auf.

Es hat sich bewährt, dass das Lackpolymer auf Basis zumindest einer Komponente aus der Gruppe: "Polyester, Polyesterimid, Polyesteramidimid, Polyurethan, Polyamid, Polyamidimid, Polyimid" ausgebildet ist. Besonders bevorzugt ist das Lackpolymer auf Basis zumindest einer Komponente aus der Gruppe: "Polyester, Polyesterimid, Polyamidimid" ausgebildet und ganz besonders bevorzugt ist das Lackpolymer auf Basis von Polyesterimid ausgebildet. Es liegt im Rahmen der Erfindung, dass die auf dem Leitkern bzw. unmittelbar auf dem Leitkern aufgebrachte Neutralfunktionsschicht bzw. Neutralfunktionsschichten aus dem Lackpolymer bzw. aus zumindest einem Lackpolymer besteht/bestehen. - Eine sehr bevorzugte Ausführungsform der Erfindung ist dadurch gekennzeichnet, dass die Abschlussschicht des Elektroisolierlackes als Neutralfunktionsschicht ausgebildet ist und aus zumindest einem der vorgenannten Lackpolymere besteht bzw. im Wesentlichen besteht. Es hat sich dabei bewährt, dass das Lackpolymer der Neutralfunktionsschicht bzw. der Abschlussschicht auf Basis zumindest einer Komponente aus der Gruppe: Polyester, Polyesterimid, Polyamidimid" ausgebildet ist. Ganz besonders hat sich bewährt, dass das Lackpolymer der Neutralfunktionsschicht bzw. Abschlussschicht auf Basis von Polyamidimid ausgebildet ist.

Eine sehr empfohlene Ausführungsform, der im Rahmen der Erfindung besondere Bedeutung zukommt, ist dadurch gekennzeichnet, dass eine Leitfunktionsschicht zwischen 0,05 Gew.-% und 15 Gew.-%, vorzugsweise zwischen 0,1 Gew.-% und 10 Gew.-%, besonders bevorzugt zwischen 0,2 Gew.-% und 5 Gew.-%, ganz besonders bevorzugt zwischen 0,3 Gew.-% und 3 Gew.-% des leitfähigen Zusatzstoffes enthält. Es liegt im Rahmen der Erfindung, dass eine Isolierfunktionsschicht des erfindungsgemäßen Lackdrahtes die vorstehend aufgeführten Gew.-%-Anteile an isolierendem Füllstoff aufweist. Der Anteil des leitfähigen Zusatzstoffes bzw. des isolierenden Füllstoffes in dem Elektroisolierlack bezieht sich in diesem Zusammenhang auf den ausgehärteten Elektroisolierlack. Für den Fall, dass der Elektroisolierlack als lösemittelhaltiger Nasslack auf den Leiterkern aufgetragen wird, bezieht sich der Anteil des leitfähigen Zusatzstoffes bzw. des isolierenden Füllstoffes in dem Elektroisolierlack in diesem Zusammenhang demzufolge auf den ausgehärteten und lösungsmittelfreien bzw. im Wesentlichen lösungsmittelfreien Zustand des Elektroisolierlackes. Die Aushärtung des Elektroisolierlackes bzw. der Elektroisolierlackschichten erfolgt im Rahmen der Erfindung vorzugsweise durch Erwärmung. Grundsätzlich kann die Aushärtung des Elektroisolierlackes bzw. der Elektroisolierlackschichten aber auch durch UV-Bestrahlung erfolgen.

Gemäß einer empfohlenen Ausführungsvariante wird der Elektroisolierlack bzw. die Elektroisolierlackschichten als lösemittelhaltiger Nasslack in einem Lackbad bzw. Tauchbad auf den Leiterkern aufgebracht. Der Nasslack kann dabei von dem zumindest einen Lackpolymer und ggf. mit zumindest einem vorzugsweise homogen in dem Lackpolymer dispergierten Zusatzstoff und/oder Füllstoff sowie zumindest einem Lösungsmittel gebildet sein. Grundsätzlich ist es auch möglich, dass das zumindest eine Lackpolymer ggf. mit zumindest einem Zusatzstoff und/oder Füllstoff lösungsmittelfrei auf den Leiterkern aufgetragen wird.

Es liegt im Rahmen der Erfindung, dass der Elektroisolierlack bzw. die Elektroisolierlackschichten als lösemittelhaltiger Nasslack über einen Filz, der den Lack aufträgt oder über eine Düse auf dem Leiterkern aufgebracht und anschließend ausgehärtet ist. Es liegt weiterhin im Rahmen der Erfindung, dass der Elektroisolierlack durch ein Extrusionsverfahren auf den Leiterkern aufgebracht ist bzw. dass die Elektroisolierlackschichten durch ein Coextrusionsverfahren auf den Leiterkern aufgebracht sind.

Nach besonders empfohlener Ausführungsform der Erfindung enthält eine Leitfunktionsschicht des flüssigen, nicht ausgehärteten Elektroisolierlackes zwischen 0,001 Gew.-% und 10 Gew.-%, vorzugsweise zwischen 0,005 Gew.-% und 5 Gew.-%, bevorzugt zwischen 0,01 Gew.-% und 3 Gew.-%, ganz besonders bevorzugt zwischen 0,01 Gew.-% und 1 Gew.-% des leitfähigen Zusatzstoffes. Es liegt im Rahmen der Erfindung, dass eine Isolierfunktionsschicht des flüssigen, nicht ausgehärteten Elektroisolierlackes entsprechende Gew.-%-Anteile an isolierendem Füllstoff enthält. Flüssiger, nicht ausgehärteter Isolierlack meint in diesem Zusammenhang insbesondere den Lösemittel enthaltenden Nasslack in dem der leitfähige Zusatzstoff bzw. der isolierende Füllstoff vorzugsweise homogen dispergiert vorliegt.

Eine ganz besonders bevorzugte Ausführungsform der Erfindung ist dadurch gekennzeichnet, dass der leitfähige Zusatzstoff homogen bzw. im Wesentlichen homogen in der jeweiligen Leitfunktionsschicht verteilt ist. Es liegt fernerhin im Rahmen der Erfindung, dass der isolierende Füllstoff homogen bzw. im Wesentlichen homogen in der jeweiligen Isolierfunktionsschicht verteilt ist.

Eine sehr empfohlene Ausführungsform der Erfindung ist dadurch gekennzeichnet, dass der zumindest eine leitfähige Zusatzstoff eine elektrische Leitfähigkeit (σ) bei Raumtemperatur zwischen 10⁻¹⁰ S·cm⁻¹ bis 10⁶ S·cm⁻¹, bevorzugt zwischen 10⁻⁸ S·cm⁻¹ und 10⁴ S ·cm⁻¹ aufweist. Zweckmäßigerweise weist der spezifische Widerstand (ρ) des zumindest einen leitfähigen Zusatzstoffes einen negativen Temperaturkoeffizienten auf. Negativer Temperaturkoeffizient des spezifischen Widerstandes des zumindest einen leitfähigen Zusatzstoffes meint im Rahmen der Erfindung insbesondere, dass der spezifische Widerstand (ρ) des zumindest einen leitfähigen Zusatzstoffes bei einer Temperaturerhöhung bevorzugt abnimmt. Im Rahmen dieser Ausführungsform nimmt folglich die elektrische Leitfähigkeit (o) des zumindest einen leitfähigen Zusatzstoffes bei einer Temperaturerhöhung vorzugsweise zu.

Es empfiehlt sich, dass der zumindest eine isolierende Füllstoff eine elektrische Leitfähigkeit (σ) besitzt, die geringer als 10⁻⁸ S·cm⁻¹, bevorzugt geringer als 10⁻¹⁰ S·cm⁻¹ ist.

Nachfolgend wird die Erfindung anhand eines Ausführungsbeispiels näher erläutert. Nach einer sehr bewährten Ausführungsform weist der erfindungsgemäße Lackdraht die nachstehend aufgeführte Schichtenfolge (von innen nach außen) auf:
A) Leiterkern aus Kupfer und/oder Aluminium
B) zumindest eine Neutralfunktionsschicht aus zumindest einem Lackpolymer aus der Gruppe "Polyester, Polyesterimid, Polyamidimid", insbesondere Polyesterimid und/oder Polyamidimid, vorzugsweise ohne leitfähige Zusatzstoffe und bevorzugt ohne isolierende Füllstoffe,
C) zumindest eine Isolierfunktionsschicht aus zumindest einem Lackpolymer aus der Gruppe "Polyester, Polyesterimid, Polyamidimid", insbesondere Polyesterimid und/oder Polyamidimid, und zumindest einem darin verteilten isolierenden Füllstoff aus der Gruppe "Glimmer, Kaolin, Korund, Edelkorund, Silikat, Aluminiumoxid, Sulfat, Siliziumdioxid, Titandioxid",
D) zumindest eine Leitfunktionsschicht aus zumindest einem Lackpolymer aus der Gruppe "Polyester, Polyesterimid, Polyamidimid", insbesondere Polyesterimid und/oder Polyamidimid, und zumindest einem darin verteilten leitfähigen Zusatzstoff aus der Gruppe "Carbid, Silizid, Nitrid, Oxid, Titanat", bevorzugt Carbid und/oder Übergangsmetallnitrid,
C) zumindest eine Isolierfunktionsschicht aus zumindest einem Lackpolymer aus der Gruppe "Polyester, Polyesterimid, Polyamidimid", insbesondere Polyesterimid und/oder Polyamidimid, und zumindest einem darin verteilten isolierenden Füllstoff aus der Gruppe "Glimmer, Kaolin, Korund, Edelkorund, Silikat, Aluminiumoxid, Sulfat, Siliziumdioxid, Titandioxid".

An die letztgenannte zumindest eine Isolierfunktionsschicht C) kann nach einer bevorzugten Ausführungsform zumindest eine weitere Leitfunktionsschicht D) anschließen und empfohlenermaßen kann daran zumindest eine weitere Isolierfunktionsschicht C) anschließen. Grundsätzlich können nach außen hin weitere Leitfunktionsschichten D) und Isolierfunktionsschichten C) anschließen, wobei diese Leitfunktionsschichten D) und Isolierfunktionsschichten C) vorzugsweise in alternierender Reihenfolge angeordnet sind. - Gemäß einer weiteren bevorzugten Ausführungsform der Erfindung kann an die vorgenannte zumindest eine Neutralfunktionsschicht B) zunächst unmittelbar zumindest eine Leitfunktionsschicht D) anschließen und daran zumindest eine Isolierfunktionsschicht C), wobei an diese letztgenannte Isolierfunktionsschicht nach bewährter Ausführungsform zumindest eine weitere Leitfunktionsschicht D) angeschlossen ist. Auch hier können weitere Isolierfunktionsschichten C) und Leitfunktionsschichten D) nach außen hin anschließen und zwar bevorzugt in alternierender Reihenfolge. - Es liegt im Rahmen der Erfindung, dass an die alternierende Reihenfolge aus Isolierfunktionsschichten und Leitfunktionsschichten eine Abschlussschicht als äußere Schicht des Elektroisolierlackes anschließt, wobei diese Abschlussschicht zweckmäßigerweise als Isolierfunktionsschicht C) oder als Neutralfunktionsschicht B) ausgebildet ist. Sehr bevorzugt ist die Abschlussschicht als Neutralfunktionsschicht ausgeführt.

Der Erfindung liegt die Erkenntnis zugrunde, dass sich der erfindungsgemäße Lackdraht durch eine vorteilhaft dünne Isolationsbeschichtung auszeichnet, die dennoch alle an sie gestellten Anforderungen - beispielsweise hinsichtlich der elektrischen Eigenschaften wie der Durchschlagfestigkeit - zufriedenstellend erfüllt. Die Schichtdicke des Elektroisolierlackes beträgt dabei lediglich 20 % bis 80 % der aus der Praxis bekannten Schichtdicken von Elektroisolierlacken. Durch die erfindungsgemäße Ausgestaltung des Elektroisolierlackes und insbesondere durch die spezielle Ausbildung und/oder Anordnung der Funktionsschichten kann folglich überraschend einfach und funktionssicher eine deutliche Reduzierung der Schichtdicke gegenüber den aus der Praxis bekannten Lackdrähten erreicht werden. Hervorzuheben ist in diesem Zusammenhang, dass durch die Schichtdickenreduzierung im Vergleich wesentlich verbesserte Nutfüllfaktoren bei der Herstellung von Wickelkörpern aus dem erfindungsgemäßen Lackdraht erzielt werden können. Somit kann auch der Wirkungsgrad bzw. die Energieeffizienz von Bauteilen bzw. Maschinen, die einen Wickelkörper mit dem erfindungsgemäßen Lackdraht enthalten erheblich gesteigert werden. Der erfindungsgemäße Lackdraht zeichnet sich dabei insbesondere durch seinen einfachen Aufbau und in diesem Zusammenhang durch einen vorteilhaft geringen Fertigungsaufwand aus. Durch die Verwendung von zumindest einem leitfähigen Zusatzstoff und/oder zumindest einem isolierenden Füllstoff in entsprechenden Funktionsschichten kann eine überraschend hohe Durchschlagfestigkeit des Elektroisolierlackes erzielt werden, so dass der Lackdraht die Anforderungen an die elektrischen Eigenschaften trotz einer - im Vergleich zu den aus der Praxis bekannten Lackdrähten - deutlich dünneren Isolationsschicht bzw. Elektroisolierlackschicht erfüllt. Der erfindungsgemäße Lackdraht bietet demzufolge einen optimalen Kompromiss zwischen einer geringen Dicke des auf den Leiterkern aufgetragenen Elektroisolierlacks und den erforderlichen elektrischen Eigenschaften, denen der Lackdraht genügen muss.

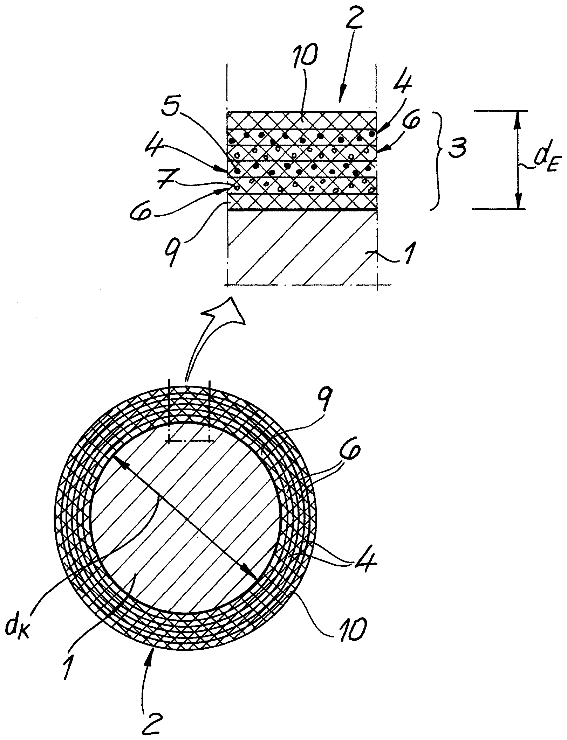

Nachfolgend wird die Erfindung anhand einer lediglich ein Ausführungsbeispiel darstellenden Zeichnung näher erläutert. - Die einzige Figur zeigt schematisch einen Querschnitt durch einen erfindungsgemäßen Lackdraht.

Die Figur zeigt einen Lackdraht, umfassend einen Leiterkern **1,** wobei der Leiterkern **1** vorzugsweise und im Ausführungsbeispiel aus Kupfer besteht bzw. im Wesentlichen besteht. Gemäß einer bevorzugten Ausführungsform und im Ausführungsbeispiel weist der Leiterkern **1** einen Durchmesser (d_{K}) von etwa 0,2 mm auf. Die Oberfläche des Leiterkerns **1** ist bevorzugt und im Ausführungsbeispiel vollständig mit einem Elektroisolierlack **2** beschichtet, wobei der Elektroisolierlack **2** auf Basis zumindest eines Lackpolymers **3** ausgebildet ist. Zweckmäßigerweise und im Ausführungsbeispiel ist das Lackpolymer **3** auf Basis von Polyesterimid ausgebildet.

Erfindungsgemäß ist unmittelbar auf dem Leiterkern **1** eine Neutralfunktionsschicht als Basisschicht **9** aufgebracht, die vorzugsweise und im Ausführungsbeispiel aus dem zumindest einen Lackpolymer **3** besteht. Auf dieser Basisschicht **9** ist bevorzugt und im Ausführungsbeispiel eine Isolierfunktionsschicht **6** mit einem isolierenden Füllstoff **7** aufgebracht, wobei der isolierende Füllstoff **7** zweckmäßigerweise und im Ausführungsbeispiel gemäß der Figur homogen bzw. im Wesentlichen homogen in der Isolierfunktionsschicht **6** verteilt ist. Auf dieser Isolierfunktionsschicht **6** ist vorzugsweise und im Ausführungsbeispiel eine Leitfunktionsschicht **4** mit einem leitfähigen Zusatzstoff **5** aufgebracht, wobei der leitfähige Zusatzstoff **5** bevorzugt homogen bzw. im Wesentlichen homogen in der Leitfunktionsschicht **4** verteilt ist. Gemäß empfohlener Ausführungsform und im Ausführungsbeispiel ist auf die Leitfunktionsschicht **4** eine Isolierfunktionsschicht **6** mit einem isolierenden Füllstoff **7** aufgebracht und auf diese Isolierfunktionsschicht **6** ist wiederum eine Leitfunktionsschicht **4** mit einem leitfähigen Zusatzstoff **5** aufgebracht. Zweckmäßigerweise und im Ausführungsbeispiel sind die Leitfunktionsschichten **4** und die Isolierfunktionsschichten **6** demnach in alternierender Schichtenfolge angeordnet.

Es hat sich bewährt, dass eine Abschlussschicht **10** als äußere Schicht des Elektroisolierlackes **2** vorgesehen ist, die vorzugsweise und im Ausführungsbeispiel als Neutralfunktionsschicht vorgesehen ist. Empfohlenermaßen besteht die Abschlussschicht **10** bzw. die als Neutralfunktionsschicht ausgebildete Abschlussschicht aus Polyamidimid bzw. im Wesentlichen aus Polyamidimid. Der Lackdraht weist im Ausführungsbeispiel gemäß der Figur somit sechs Funktionsschichten auf. Im Ausführungsbeispiel mag die Gesamtschichtdicke (d_{E}) des Elektroisolierlacks **2** 20 µm betragen. Das Verhältnis des Durchmessers (d_{K}) des Leiterkerns **1** zur Gesamtschichtdicke (d_{E}) des Elektroisolierlacks **2** beträgt dann vorzugsweise und im Ausführungsbeispiel gemäß der Figur etwa 10.

## Patentansprüche

1. Lackdraht, mit einem Leiterkern (1), wobei die Oberfläche des Leiterkerns (1) vollständig bzw. im Wesentlichen vollständig mit einem Elektroisolierlack (2) beschichtet ist, wobei der Elektroisolierlack (2) auf Basis zumindest eines Lackpolymers (3) ausgebildet ist,
wobei der Elektroisolierlack (2) eine Mehrzahl von Funktionsschichten aufweist, wobei als Funktionsschicht(en)
- zumindest eine Leitfunktionsschicht (4) mit zumindest einem leitfähigen Zusatzstoff (5) vorgesehen ist
- und zumindest eine Isolierfunktionsschicht (6) mit zumindest einem isolierenden Füllstoff (7) vorgesehen ist
- und zumindest eine Neutralfunktionsschicht (8) vorgesehen ist, die frei von leitfähigen Zusatzstoffen (5) und frei von isolierenden Füllstoffen (7) ist und die aus dem zumindest einen Lackpolymer (3) bzw. im Wesentlichen aus dem zumindest einen Lackpolymer (3) besteht,
wobei unmittelbar auf dem Leiterkern (1) eine Neutralfunktionsschicht (8) als Basisschicht (9) aufgebracht ist, wobei auf dieser Basisschicht (9) zumindest eine Leitfunktionsschicht (4) und zumindest eine Isolierfunktionsschicht (6) aufgebracht ist und wobei das Verhältnis des Durchmessers (d_{K}) des Leiterkerns (1) zur Gesamtschichtdicke (d_{E}) des Elektroisolierlacks (2) größer oder gleich drei ist.

2. Lackdraht nach Anspruch 1, wobei der zumindest eine leitfähige Zusatzstoff (5) und der zumindest eine isolierende Füllstoff (7) jeweils in separaten Funktionsschichten (4, 6) angeordnet sind.

3. Lackdraht nach Anspruch 2, wobei der Elektroisolierlack (2) zumindest zwei Leitfunktionsschichten (4) und/oder zumindest zwei Isolierfunktionsschichten (6) aufweist, wobei die Funktionsschichten (4, 6) vorzugsweise in alternierender Schichtenfolge angeordnet sind.

4. Lackdraht nach einem der der Ansprüche 1 bis 3, wobei der Elektroisolierlack (2) zumindest fünf, vorzugsweise zumindest sechs Funktionsschichten (4, 6, 8) aufweist und/oder wobei der Elektroisolierlack (2) maximal 40, bevorzugt maximal 35, besonders bevorzugt maximal 30 Funktionsschichten (4, 6, 8) aufweist.

5. Lackdraht nach einem der Ansprüche 1 bis 4, wobei die Schichtdicke einer Funktionsschicht (4, 6, 8) zwischen 0,5 µm und 15 µm, bevorzugt zwischen 1 µm und 10 µm, besonders bevorzugt zwischen 2 µm und 5 µm beträgt.

6. Lackdraht nach einem der Ansprüche 1 bis 5, wobei die Basisschicht (9) als Schichtaggregat aus zumindest zwei Neutralfunktionsschichten (8) ausgebildet ist.

7. Lackdraht nach einem der Ansprüche 1 bis 6, wobei die Gesamtschichtdicke (d_{E}) des Elektroisolierlacks (2) zwischen 2 µm und 200 µm, bevorzugt zwischen 3 µm und 150 µm, besonders bevorzugt zwischen 3,5 µm und 120 µm beträgt.

8. Lackdraht nach einem der Ansprüche 1 bis 7, wobei der leitfähige Zusatzstoff (5) aus der Gruppe: "Anorganisches Halbleitermaterial, organisches Halbleitermaterial, leitfähiges Kohlenstoffmaterial" ausgewählt ist.

9. Lackdraht nach einem der Ansprüche 1 bis 8, wobei der leitfähige Zusatzstoff (5) ein keramisches Halbleitermaterial ist, das vorzugsweise aus der Gruppe: "Carbide, Silizide, Nitride, Oxide, Titanate" ausgewählt ist, bevorzugt ein Carbid und/oder Nitrid ist, besonders bevorzugt ein Siliziumcarbid und/oder Übergangsmetallnitrid ist, ganz besonders bevorzugt ein frühes Übergangsmetallnitrid ist und beispielsweise aus der Gruppe: "Titannitride, Zirkoniumnitride, Hafniumnitride, Vanadiumnitride, Niobnitride, Tantalnitride, Chromnitride, Molybdännitride, Wolframnitride" ausgewählt ist.

10. Lackdraht nach einem der Ansprüche 1 bis 9, wobei der leitfähige Zusatzstoff (5) aus der Gruppe: "Ruße, Kohlenstoffnanoröhren, Fullerene, Graphen, Graphit, Glaskohlenstoffe" ausgewählt ist.

11. Lackdraht nach einem der Ansprüche 1 bis 10, wobei der leitfähige Zusatzstoff (5) ein II-VI-Halbleiter, bevorzugt ein Zinksulfid oder Zinkoxid ist.

12. Lackdraht nach einem der Ansprüche 1 bis 11, wobei der isolierende Füllstoff (7) ein anorganischer Stoff ist und bevorzugt aus der Gruppe: "Glimmer, Kaolin, Korund, Edelkorund, Silikate, Aluminiumoxide, Sulfate, Siliziumdioxide, Titandioxide" ausgewählt ist.

13. Lackdraht nach einem der Ansprüche 1 bis 12, wobei der isolierende Füllstoff (7) ein oberfächenmodifiziertes Silikat, bevorzugt ein silanisiertes Silikat, besonders bevorzugt ein mit zumindest einer Komponente aus der Gruppe: "Aminosilan, Epoxysilan, Methacrylsilan, Trimethylsilan, Methylsilan, Vinylsilan" modifiziertes Silikat ist.

14. Lackdraht nach einem der Ansprüche 1 bis 13, wobei das Lackpolymer (3) auf Basis zumindest einer Komponente aus der Gruppe: "Polyester, Polyesterimid, Polyesteramidimid, Polyurethan, Polyamid, Polyamidimid, Polyimid" ausgebildet ist, bevorzugt auf Basis zumindest einer Komponente aus der Gruppe: "Polyester, Polyesterimid, Polyamidimid" ausgebildet ist und besonders bevorzugt auf Basis von Polyesterimid ausgebildet ist.

15. Lackdraht nach einem der Ansprüche 1 bis 14, wobei eine Leitfunktionsschicht (4) zwischen 0,05 Gew.-% und 15 Gew.-%, vorzugsweise zwischen 0,1 Gew.-% und 10 Gew.-%, besonders bevorzugt zwischen 0,2 Gew.-% und 5 Gew.-%, ganz besonders bevorzugt zwischen 0,3 Gew.-% und 3 Gew.-% des leitfähigen Zusatzstoffes (5) enthält und/oder wobei eine Isolierfunktionsschicht (6) zwischen 0,05 Gew.-% und 15 Gew.-%, vorzugsweise zwischen 0,1 Gew.-% und 10 Gew.-%, besonders bevorzugt zwischen 0,2 Gew.-% und 5 Gew.-%, ganz besonders bevorzugt zwischen 0,3 Gew.-% und 3 Gew.-% des isolierenden Füllstoffes (7) enthält.

16. Lackdraht nach einem der Ansprüche 1 bis 15, wobei eine Leitfunktionsschicht (4) des flüssigen, nicht ausgehärteten Elektroisolierlackes (2) zwischen 0,001 Gew.-% und 10 Gew.-%, vorzugsweise zwischen 0,005 Gew.-% und 5 Gew.-%, bevorzugt zwischen 0,01 Gew.-% und 3 Gew.-%, ganz besonders bevorzugt zwischen 0,01 Gew.-% und 1 Gew.-% des leitfähigen Zusatzstoffes (5) enthält und/oder wobei eine Isolierfunktionsschicht (6) des flüssigen, nicht ausgehärteten Elektroisolierlackes (2) zwischen 0,001 Gew.-% und 10 Gew.-%, vorzugsweise zwischen 0,005 Gew.-% und 5 Gew.-%, bevorzugt zwischen 0,01 Gew.-% und 3 Gew.-%, ganz besonders bevorzugt zwischen 0,01 Gew.-% und 1 Gew.-% des isolierenden Füllstoffes (7) enthält.

17. Lackdraht nach einem der Ansprüche 1 bis 16, wobei der leitfähige Zusatzstoff (5) homogen bzw. im Wesentlichen homogen in der jeweiligen Leitfunktionsschicht (4) verteilt ist und/oder wobei der isolierende Füllstoff (7) homogen bzw. im Wesentlichen homogen in der jeweiligen Isolierfunktionsschicht (6) verteilt ist.

18. Lackdraht nach einem der Ansprüche 1 bis 17, wobei der zumindest eine leitfähige Zusatzstoff (5) eine elektrische Leitfähigkeit (σ) bei Raumtemperatur zwischen 10⁻¹⁰ S·cm⁻¹ und 10⁶ S·cm⁻¹, bevorzugt zwischen 10⁻⁸ S·cm⁻¹ und 10⁴ S·cm⁻¹ und/oder wobei der spezifische Widerstand (ρ) des zumindest einen leitfähigen Zusatzstoffes (5) einen negativen Temperaturkoeffizienten aufweist.

## Claims

1. An enamelled wire, having a conductor core (1), wherein the surface of the conductor core (1) is completely, or substantially completely, coated with an electrical insulation varnish (2), wherein the electrical insulation varnish (2) is based on at least one varnish polymer (3),
wherein the electrical insulation varnish (2) comprises a plurality of functional layers, wherein as functional layer(s)
- at least one conductive functional layer (4) with at least one conductive additive (5) is provided
- and at least one insulating functional layer (6) with at least one insulating filler (7) is provided
- and at least one neutral functional layer (8) is provided that is free of conductive additives (5) and free of insulating fillers (7) and consists of the at least one varnish polymer (3) or substantially of the at least one varnish polymer (3),
wherein a neutral functional layer (8) is applied directly to the conductor core (1) as a base layer (9), wherein at least one conductive functional layer (4) and at least one insulating functional layer (6) are applied to this base layer (9) and wherein the ratio of the diameter (d_{K}) of the conductor core (1) to the total layer thickness (d_{E}) of the electrical insulation varnish (2) is greater than, or equal to, three.

2. The enamelled wire according to Claim 1, wherein the at least one conductive additive (5) and the at least one insulating filler (7) are each arranged in separate functional layers (4, 6).

3. The enamelled wire according to Claim 2, wherein the electrical insulation varnish (2) comprises at least two conductive functional layers (4) and/or at least two insulating functional layers (6), wherein the functional layers (4, 6) are preferably arranged in an alternating sequence of layers.

4. The enamelled wire according to any one of Claims 1 to 3, wherein the electrical insulation varnish (2) comprises at least five, preferably at least six, functional layers (4, 6, 8) and/or wherein the electrical insulation varnish (2) comprises a maximum of 40, preferably a maximum of 35, particularly preferably a maximum of 30, functional layers (4, 6, 8) .

5. The enamelled wire according to any one of Claims 1 to 4, wherein the layer thickness of a functional layer (4, 6, 8) is between 0.5 µm and 15 µm, preferably between 1 µm and 10 µm, particularly preferably between 2 µm and 5 µm.

6. The enamelled wire according to any one of Claims 1 to 5, wherein the base layer (9) is designed as a layer assembly made up of at least two neutral functional layers (8).

7. The enamelled wire according to any one of Claims 1 to 6, wherein the total layer thickness (d_{E}) of the electrical insulation varnish (2) is between 2 µm and 200 µm, preferably between 3 µm and 150 µm, particularly preferably between 3.5 µm and 120 µm.

8. The enamelled wire according to any one of Claims 1 to 7, wherein the conductive additive (5) is selected from the group: "inorganic semiconductor material, organic semiconductor material, conductive carbon material."

9. The enamelled wire according to any one of Claims 1 to 8, wherein the conductive additive (5) is a ceramic semiconductor material, preferably selected from the group: "carbides, silicides, nitrides, oxides, titanates", preferably a carbide and/or nitride, more preferably a silicon carbide and/or a transition metal nitride, particularly preferably an early transition metal nitride, and is selected, for example, from the group: "titanium nitrides, zirconium nitrides, hafnium nitrides, vanadium nitrides, niobium nitrides, tantalum nitrides, chromium nitrides, molybdenum nitrides, tungsten nitrides."

10. The enamelled wire according to any one of Claims 1 to 9, wherein the conductive additive (5) is selected from the group: "carbon blacks, carbon nanotubes, fullerenes, graphene, graphite, glassy carbons".

11. The enamelled wire according to any one of Claims 1 to 10, wherein the conductive additive (5) is a II-VI semiconductor, preferably a zinc sulphide or zinc oxide.

12. The enamelled wire according to any one of Claims 1 to 11, wherein the insulating filler (7) is an inorganic substance and preferably selected from the group: "mica, kaolin, corundum, synthetic corundum, silicates, aluminium oxides, sulphates, silicon dioxides, titanium dioxides".

13. The enamelled wire according to any one of Claims 1 to 12, wherein the insulating filler (7) is a surface-modified silicate, preferably a silanized silicate, particularly preferably a silicate modified with at least one component from the group: "aminosilane, epoxysilane, methacrylsilane, trimethylsilane, methylsilane, vinylsilane".

14. The enamelled wire according to any one of Claims 1 to 13, wherein the varnish polymer (3) is based on at least one component from the group: "polyester, polyesterimide, polyesteramideimide, polyurethane, polyamide, polyamideimide, polyimide", preferably based on at least one component from the group: "polyester, polyesterimide, polyamideimide" and particularly preferably based on polyesterimide.

15. The enamelled wire according to any one of Claims 1 to 14, wherein a conductive functional layer (4) contains between 0.05 wt.% and 15 wt.%, preferably between 0.1 wt.% and 10 wt.%, more preferably between 0.2 wt.% and 5 wt.% and most preferably between 0.3 wt.% and 3 wt.% of the conductive additive (5) and/or wherein an insulating functional layer (6) contains between 0.05 wt.% and 15 wt.%, preferably between 0.1 wt.% and 10 wt.%, more preferably between 0.2 wt.% and 5 wt.% and most preferably between 0.3 wt.% and 3 wt.% of the insulating filler (7).

16. The enamelled wire according to any one of Claims 1 to 15, wherein a conductive functional layer (4) of the liquid, uncured electrical insulation varnish (2) contains between 0.001 wt.% and 10 wt.%, preferably between 0.005 wt.% and 5 wt.%, more preferably between 0.01 wt.% and 3 wt.% and most preferably between 0.01 wt.% and 1 wt.% of the conductive additive (5) and/or wherein an insulating functional layer (6) of the liquid, uncured electrical insulation varnish (2) contains between 0.001 wt.% and 10 wt.%, preferably between 0.005 wt.% and 5 wt.%, more preferably between 0.01 wt.% and 3 wt.% and most preferably between 0.01 wt.% and 1 wt.% of the insulating filler (7).

17. The enamelled wire according to any one of Claims 1 to 16, wherein the conductive additive (5) is homogeneously or substantially homogeneously distributed within the respective conductive functional layer (4) and/or wherein the insulating filler (7) is homogeneously or substantially homogeneously distributed within the respective insulating functional layer (6).

18. The enamelled wire according to any one of Claims 1 to 17, wherein the at least one conductive additive (5) exhibits an electrical conductivity (σ) at room temperature of between 10⁻¹⁰ S·cm⁻¹ and 10⁶ S·cm⁻¹, preferably between 10⁻⁸ S·cm⁻¹ and 10⁴ S·cm⁻¹ and/or wherein the specific resistance (ρ) of the at least one conductive additive (5) has a negative temperature coefficient.

## Revendications

1. Fil émaillé, pourvu d'un noyau conducteur (1), la surface du noyau conducteur (1) étant revêtue en totalité ou sensiblement en totalité d'un vernis isolant électrique (2), le vernis isolant électrique (2) étant conçu sur la base d'au moins un polymère émaillé (3),
le vernis isolant électrique (2) comportant une pluralité de couches fonctionnelles, en tant que couche(s) fonctionnelles (s)
- étant prévue au moins une couche fonctionnelle conductrice (4), dotée d'au moins un additif conducteur (5)
- et étant prévue au moins une couche fonctionnelle isolante (6), dotée d'au moins un agent de charge (7) isolant
- et étant prévue au moins une couche fonctionnelle neutre (8), qui est exempte d'additifs conducteurs (5) et exempte d'agents de charge (7) isolants et qui est constituée de l'au moins un polymère émaillé (3) ou sensiblement de l'au moins un polymère émaillé (3),
directement sur le noyau conducteur (1) étant appliquée en tant que couche de base (9) une couche fonctionnelle neutre (8), sur ladite couche de base (9) étant appliquée au moins une couche fonctionnelle conductrice (4) et au moins une couche fonctionnelle isolante (6) et le rapport du diamètre (d_{K}) du noyau conducteur (1) à l'épaisseur totale de couche (d_{E}) du vernis isolant électrique (2) étant supérieur ou égal à trois.

2. Fil émaillé selon la revendication 1, l'au moins un additif conducteur (5) et l'au moins un agent de charge (7) isolant étant chacun placés dans des couches fonctionnelles (4, 6) séparées.

3. Fil émaillé selon la revendication 2, le vernis isolant électrique (2) comportant au moins deux couches fonctionnelles conductrices (4) et / ou au moins deux couches fonctionnelles isolantes (6), les couches fonctionnelles (4, 6) étant placées de préférence en succession de couches alternées.

4. Fil émaillé selon l'une quelconque des revendications 1 à 3, le vernis isolant électrique (2) comportant au moins cinq, de préférence au moins six couches fonctionnelles (4, 6, 8) et / ou le vernis isolant électrique (2) comportant au maximum 40, de manière préférentielle, au maximum 35, de manière particulièrement préférentielle un maximum de 30 couches fonctionnelles (4, 6, 8).

5. Fil émaillé selon l'une quelconque des revendications 1 à 4, l'épaisseur de couche d'une couche fonctionnelle (4, 6, 8) étant comprise entre 0,5 µm et 15 µm, de manière préférentielle entre 1 µm et 10 µm, de manière particulièrement préférentielle entre 2 µm et 5 µm.

6. Fil émaillé selon l'une quelconque des revendications 1 à 5, la couche de base (9) étant conçue sous la forme d'un agrégat de couches constitué d'au moins deux couches fonctionnelles neutres (8).

7. Fil émaillé selon l'une quelconque des revendications 1 à 6, l'épaisseur totale de couche (d_{E}) du vernis isolant électrique (2) étant comprise entre 2 µm et 200 µm, de manière préférentielle entre 3 µm et 150 µm, de manière particulièrement préférentielle entre 3,5 µm et 120 µm.

8. Fil émaillé selon l'une quelconque des revendications 1 à 7, l'additif conducteur (5) étant sélectionné dans le groupe : « matériau semiconducteur inorganique, matériau semiconducteur organique, matériau carboné conducteur ».

9. Fil émaillé selon l'une quelconque des revendications 1 à 8, l'additif conducteur (5) étant un matériau semiconducteur céramique, qui est sélectionné de préférence dans le groupe comprenant : « les carbures, les siliciures, les nitrures, les oxydes les titanates », étant de manière préférentielle un carbure et / ou un nitrure, de manière particulièrement préférentielle un carbure de silicium et / ou un nitrure de métal de transition, de manière particulièrement et totalement préférentielle un nitrure de métal de transition précoce et étant choisi par exemple dans le groupe comprenant : « les nitrures de titane, les nitrures de zirconium, les nitrures d'hafnium, les nitrures de vanadium, les nitrures de niobium, les nitrures de tantale, les nitrures de chrome, les nitrures de molybdène, les nitrures de tungstène ».

10. Fil émaillé selon l'une quelconque des revendications 1 à 9, l'additif conducteur (5) étant sélectionné dans le groupe comprenant : « les suies, les nanotubes de carbone, les fullerènes, les graphènes, les graphites, les carbones vitreux ».

11. Fil émaillé selon l'une quelconque des revendications 1 à 10, l'additif conducteur (5) étant un semiconducteur II-VI, de manière préférentielle un sulfure de zinc ou un oxyde de zinc.

12. Fil émaillé selon l'une quelconque des revendications 1 à 11, l'agent de charge (7) isolant étant une matière anorganique et de manière préférentielle, étant sélectionné dans le groupe comprenant : « le mica, le kaolin, le corindon, le corindon affiné, les silicates, les oxydes d'aluminium, les sulfates, les dioxydes de silicium, les dioxydes de titane.

13. Fil émaillé selon l'une quelconque des revendications 1 à 12, l'agent de charge (7) isolant étant un silicate modifié en surface, de manière préférentielle un silicate silanisé, de manière particulièrement préférentielle un silicate modifié avec au moins un composant du groupe comprenant : « un aminosilane, un époxysilane, un silane méthacrylique, un triméthylsilane, un méthylsilane, un vinylsilane ».

14. Fil émaillé selon l'une quelconque des revendications 1 à 13, le polymère émaillé (3) étant conçu sur la base d'au moins un composant du groupe comprenant : « le polyester, le polyesterimide, le polyesteramideimide, le polyuréthane, le polyamide, le polyamidimide, le polyimide », étant conçu de manière préférentielle sur la base d'au moins un composant du groupe comprenant : le polyester, le polyesterimide, le polyamidimide » et de manière particulièrement préférentielle de polyesterimide.

15. Fil émaillé selon l'une quelconque des revendications 1 à 14, une couche fonctionnelle conductrice (4) contenant entre 0,05 % en poids et 15 % en poids, de préférence entre 0,1 % en poids et 10 % en poids, de manière particulièrement préférentielle entre 0,2 % en poids et 5 % en poids, de manière particulièrement et totalement préférentielle entre 0,3 % en poids et 3 % en poids de l'additif conducteur (5) et / ou une couche fonctionnelle isolante (6) contenant entre 0,05 % en poids et 15 % en poids, de préférence entre 0,1 % en poids et 10 % en poids, de manière particulièrement préférentielle entre 0,2 % en poids et 5 % en poids, de manière particulièrement et totalement préférentielle entre 0,3 % en poids et 3 % en poids de l'agent de charge (7) isolant.

16. Fil émaillé selon l'une quelconque des revendications 1 à 15, une couche fonctionnelle conductrice (4) du vernis isolant (2) liquide, non solidifié contenant entre 0,001 % en poids et 10 % en poids, de préférence entre 0,005 % en poids et 5 % en poids, de manière préférentielle entre 0,01 % en poids et 3 % en poids, de manière particulièrement et totalement préférentielle entre 0,01 % en poids et 1 % en poids de l'additif conducteur (5) et / ou une couche fonctionnelle isolante (6) du vernis isolant (2) liquide non solidifié contenant entre 0,001 % en poids et 10 % en poids, de préférence entre 0,005 % en poids et 5 % en poids, de manière préférentielle entre 0,01 % en poids et 3 % en poids, de manière particulièrement et totalement préférentielle entre 0,01 % en poids et 1 % en poids de l'agent de charge (7) isolant.

17. Fil émaillé selon l'une quelconque des revendications 1 à 16, l'additif conducteur (5) étant distribué de manière homogène ou sensiblement homogène dans la couche fonctionnelle conductrice (4) respective et / ou l'agent de charge (7) isolant étant distribué de manière homogène ou sensiblement homogène dans la couche fonctionnelle isolante (6) respective.

18. Fil émaillé selon l'une quelconque des revendications 1 à 17, l'au moins un additif conducteur (5) faisant preuve d'une conductibilité électrique (σ) comprise à température ambiante entre 10⁻¹⁰ S·cm⁻¹ et 10⁶ S·cm⁻¹, de manière préférentielle entre 10⁻⁸ S·cm⁻¹ et 10⁴ S·cm⁻¹ et / ou la résistance spécifique (p) de l'au moins un additif conducteur (5) faisant preuve d'un coefficient de température négatif.
